(19) Europäisches Patentamt

European Patent Office

Office européen des brevets

(11) Veröffentlichungsnummer: **0 426 649 B1**

(12) **EUROPÄISCHE PATENTSCHRIFT**

(45) Veröffentlichungstag der Patentschrift: **12.10.94**

(51) Int. Cl.5: **B01D 61/44**

(21) Anmeldenummer: **90890287.7**

(22) Anmeldetag: **25.10.90**

(54) **Verfahren zur stufenweisen Elektrodialyse von alkalisulfathaltigen wässerigen Lösungen sowie Vorrichtung zur Durchführung des Verfahrens.**

(30) Priorität: **31.10.89 AT 2507/89**

(43) Veröffentlichungstag der Anmeldung:
**08.05.91 Patentblatt 91/19**

(45) Bekanntmachung des Hinweises auf die Patenterteilung:
**12.10.94 Patentblatt 94/41**

(84) Benannte Vertragsstaaten:
**AT BE DE ES GB IT NL SE**

(56) Entgegenhaltungen:
**EP-A- 0 096 239**
**EP-A- 0 124 007**
**US-A- 4 391 680**

**DATABASE WPIL, nr. 83-14185K (06) DER-WENT PUBLICATIONS Ltd, London & SUA-916601 (AS KAZA CHEM METAL) 30.03.82**

(73) Patentinhaber: **Lenzing Aktiengesellschaft**

**A-4860 Lenzing (AT)**

(72) Erfinder: **Schmidt, Heinrich, Dr.**
**Oberstadtgries 9**
**A-4840 Vöcklabruck (AT)**

Erfinder: **Boxan, Christoph, Dr.**
**Hauptstrasse 36**
**A-4860 Lenzing (AT)**
Erfinder: **Verwanger, Arnold**
**Kammerl am Berg 4**
**A-4861 Schörfling (AT)**
Erfinder: **Holzinger, Reinhard**

**A-4844 Regau 3 (DE)**
Erfinder: **Kalleitner, Hans**
**Fischerstrasse 14**
**A-4861 Schörfling (AT)**
Erfinder: **Salim, Jamal**
**Rosenstrasse 5**
**A-4850 Timelkam (AT)**

(74) Vertreter: **Schwarz, Albin, Dr.**
**Albertgasse 10/8**
**Postfach 224**
**A-1081 Wien (AT)**

## Beschreibung

Die Erfindung betrifft ein Verfahren zur Aufarbeitung alkalisulfathältiger wässeriger Lösungen durch stufenweise Elektrodialyse, wobei diese Lösungen durch eine Mehrzahl von in Serie arbeitenden Elektrodialysezellen geleitet werden, welche Säure- und Basenkammer aufweisen und eine Kationenaustauschermembran besitzen, sowie eine Vorrichtung zur Durchführung des Verfahrens.

Sulfathältige wässerige Lösungen fallen als Abfallprodukte bei den verschiedensten chemieindustriellen Prozessen an. Diese Lösungen müssen entsorgt werden. Dazu werden sie heutzutage meist eingedampft, wobei die Salze - soweit möglich - in fester Form nach aufwendiger Reinigung und Trocknung anderweitig verwendet werden.

Bei einer umweltbewußten Prozeßführung müßte der Chemikalienkreislauf geschlossen werden, indem die Sulfate in den Primärprozeß zurückgeführt werden. Beispielsweise würde das beim Xanthogenatprozeß bedeuten, daß das gebrauchte Spinnbad wieder zu Schwefelsäure und Lauge aufgearbeitet werden muß, um die Schwefelsäure zur Bereitung einer frischen Spinnbadlösung und die Lauge zur Xanthogenatherstellung rückführen zu können.

Seit Jahren wird versucht, Elektrolyseverfahren zu entwickeln, um eine derartige Aufarbeitung kostengünstig durchführen zu können. In der SU-A - 701 961 ist beispielsweise ein Verfahren beschrieben, nach welchem die Spaltung des Sulfates mit Hilfe eines 3-Kammer-Elektrodialysators durchgeführt wird. Dieser ist eine Elektrolysevorrichtung, welche durch eine Anionen- und eine Kationenaustauschermembran in drei Kammern unterteilt ist, und in welcher $Na_2SO_4$ in die Spaltprodukte $H_2SO_4$ und $NaOH$, jeweils in Form ihrer wässerigen Lösung, elektrolytisch gespalten wird. Die $Na_2SO_4$-Lösung wird dabei in die Mittelkammer eingespeist und die mehr oder weniger konzentrierten Produkt-Lösungen aus den jeweiligen Elektrodenräumen abgezogen.

Ein Elektrodialysator gleicher Bauart wird auch in der DE-A-3 529 649 beschrieben, bei welcher allerdings nicht reine $Na_2SO_4$-Lösungen in Wasser, sondern $Na_2SO_4$- und $H_2SO_4$-hältige Lösungen, wie sie z.B. in der Viskosefaserindustrie anfallen, elektrolysiert werden. Die $Na_2SO_4$-hältigen Lösungen werden hierbei entweder zur Gänze in die Mittelkammer und dann aus dieser in die Anodenkammer geleitet oder in zwei Teilströme getrennt, in die beiden genannten Kammern gleichzeitig eingespeist und danach wieder vereinigt.

Die im aufzuarbeitenden Spinnbad enthaltenen Verunreinigungen führen aber zu extrem kurzen Standzeiten sowohl der Membranen als auch der Anoden. So wird z.B. durch einen Gehalt an Calciumionen, welche aus der sauren Lösung durch Kationenaustauscher nicht entfernbar sind, die kathodenseitige Membran bereits innerhalb einiger Wochen irreversibel geschädigt, wodurch nicht nur die Spannung steigt und die Stromausbeute fällt, sondern auch die Durchlässigkeit für die Sulfationen stark zunimmt.

Des weiteren wird durch eine hohe Konzentration an organischen Verunreinigungen, welche sich weder durch handelsübliche Aktivkohlen noch durch Adsorptionsharze ausreichend entfernen lassen, auch die teure elektrokatalytische Beschichtung der Anode angegriffen, was sich in einem zuerst langsamen, dann aber immer schneller werdenden Spannungsanstieg zeigt.

Für die Elektrolyse von $Na_2SO_4$, $H_2SO_4$ und Erdalkaliionen enthaltenden Lösungen ist aus der EP-A-0 124 087 ein Verfahren bekannt, das mit einer aus zwei Kationenaustauschermembranen bestehenden 3-Kammerzelle arbeitet. In dieser Elektrolysevorrichtung wird der Anodenraum nicht wie in den vorhin beschriebenen Elektrodialysatoren durch eine Anionen-, sondern durch eine Kationenaustauschermembran von der Mittelkammer getrennt. Die Elektrodialyse wird dabei in der Weise durchgeführt, daß die aufzuarbeitende Lösung allein in den Anodenraum gespeist wird, während in den Mittelraum eine von Erdalkaliionen freie $Na_2SO_4$-Lösung geleitet wird. Wegen der von der Anodenseite durch die Kationenmembran ständig eindringenden Erdalkaliionen (zumeist $Ca^{2+}$ und $Mg^{2+}$) ist aber eine laufende Reinigung dieser als Puffer dienenden Mittelkammerlösung erforderlich. Dieser Reinigungsprozeß erweist sich als ziemlich aufwendig.

Eine spezielle Form der Elektrodialyse von $Na_2SO_4$-Lösungen wird in der EP-B-0 096 239 beschrieben, nach welcher die für die Salzspaltung primär erforderliche Wasserspaltung nicht an Elektroden, sondern an bipolaren Ionenaustauschermembranen erfolgt. Das sind Laminate aus je einer Kation- und einer Anionsperrenden Schicht, welche im elektrischen Feld eine fortschreitende Dissoziation des Wassers in $H_3O^+$- und $OH^-$-Ionen ermöglichen. Da bei diesem Vorgang die potentialverzehrenden Elektrodenvorgänge der gleichzeitigen $H_2$- und $O_2$-Bildung wegfallen, arbeitet der Bipolarmembran-Prozeß mit erheblich niedrigeren Stromverbräuchen als die Elektrolyse.

Der Funktionsweise der bipolaren Membran entsprechend werden die elektrochemischen Zellen anstelle von Elektroden durch bipolare Membranen begrenzt, wobei der dazwischen liegende Raum wie auch bei der Elektrolyse durch mindestens eine, je nach Zweckmäßigkeit, aber auch durch zwei oder drei Ionenaus-

tauschermembranen in eine Säure-, Base- und gegebenenfalls eine oder zwei Salzkammern unterteilt ist.

Eine Weiterentwicklung des in der oben genannten SU-A - 701 961 beschriebenen Elektrodialyseverfahrens ist der SU-A - 916 601 zu entnehmen, jedoch sind dort zwecks Erreichung eines besseren Zersetzungsgrades des $Na_2SO_4$ in seine Spaltprodukte fünf 3-Kammer-Elektrodialysatoren plus ein 2-Kammer-Elektrolyseur derart miteinander verbunden, daß diese von den Elektrolytlösungen hintereinander durchflossen werden, wobei die $Na_2SO_4$-Lösung durch die Mittelkammern der Elektrodialysatoren geleitet wird. Als Membrane werden Anionen- und Kationenaustauschermembrane, verwendet.

Neben der gewünschten Erhöhung des Zersetzungsgrades von 40 % (bei nur einer Zelle) auf 96 bis 97% resultiert dabei zwangsläufig auch eine Erhöhung der Stromausbeute von 40 bis 46% auf 70%.

Alle bekannten Elektrodialyseverfahren haben den Nachteil, daß ihre Stromausbeute relativ gering ist und daß es bei der Elektrodialyse von Erdalkaliionen enthaltenden Alkalisulfatlösungen, wie gebrauchten Spinnbadlösungen aus dem Xanthogenatprozeß, häufig zu einer Schädigung der Membranen kommt. Die Standzeiten einzelner Vorrichtungteile sind dadurch oft unerwünscht kurz.

Die Erfindung setzt sich zum Ziel, ein verbessertes Elektrodialyseverfahren zur Verfügung zu stellen, das diese Nachteile nicht aufweist.

Dieses Ziel wird bei einem Verfahren der eingangs genannten Art dadurch erreicht, daß die alkalisulfathältigen, wässerigen Lösungen ausschließlich durch Säurekammern der Elektrodialysezellen geleitet werden, welche Elektrodialysezellen in ihrem Inneren ausschließlich Kationenaustauschermembrane besitzen und durch bipolare Ionenaustauschermembranen begrenzt sind. Als Säurekammer wird jede Kammer verstanden, deren Elektrolytlösung im Laufe der Dialyse im pH-Wert sinkt.

Eine bevorzugte Ausführungsform des erfindungsgemäßen Verfahrens ist dadurch gekennzeichnet, daß die erste Stufe der Elektrodialyse in einer 2-Kammer-Elektrodialysezelle und jede weitere Stufe in einer 3-Kammer-Elektrodialysezelle durchgeführt wird, wobei die Säure- und Basenkammer der 2-Kammer-Elektrodialysezelle am besten mit konzentrierter , wässeriger $Na_2SO_4$-Lösung bzw. mit verdünnter Alkalilauge, vorzugsweise enthaltend zwischen 1,5 und 2 % Masse Alkalihydroxid, beschicktwerden und diese Lösungen in der ersten Stufe bis zu einer Schwefelsäure- bzw. Alkalihydroxid-Konzentration von maximal 10 % Masse elektrodialysiert werden.

Es hat sich gezeigt, daß bis zu diesem Wert der pH-Gradient zwischen Säure- und Laugenkammer noch nicht so groß ist, daß es zu unerwünscht hohen Stromausbeuteverlusten infolge Rekombination von $H_3O^+$ und $OH^-$ kommt. Durch die Verwendung einer 2-Kammer-statt einer 3-Kammer-Zelle kann sowohl der Investitionsaufwand als auch der IR-Verlust für das erfindungsgemäße Verfahren weiter gesenkt werden.

Die nach der ersten Stufe erhaltenen Elektrolytlösungen aus der Säure- und der Basenkammer werden anschließend in mindestens einer 3-Kammer-Zelle weiter dialysiert, u.zw. jeweils in der entsprechenden Kammer. Gleichzeitig wird die bei 3-Kammer-Zellen noch vorhandene Mittelkammer mit nahezu gesättigter, wässeriger Alkalisulfatlösung beschickt. In den gegebenenfalls noch vorhandenen weiteren Stufen werden in gleicher Weise die Elektrolytlösungen aus den drei Kammern in den jeweiligen gleichnamigen Kammern weiter dialysiert. In der letzten Stufe wird schließlich bis zur gewünschten Endkonzentration dialysiert, worauf die Endprodukte aus der Säure- bzw. Basenkammer abgezogen werden. Der Elektrolyt aus der Mittelkammer kann in die Säurekammer der ersten Zelle eingespeist werden.

Zur stufenweisen Elektrodialyse von insbesondere gebrauchten Spinnbadlösungen, die bei der Herstellung regenerierter Cellulose nach dem Xanthogenatprozeß anfallen, hat es sich als günstig erwiesen, die Lösungen ausschließlich durch Säurekammern von 3-Kammer-Elektrodialysezellen zu leiten.

Derartige Spinnbadlösungen enthalten Erdalkali-Ionen, die bei den heute bekannten Elektrodialyseverfahren häufig zu Schädigungen an Dialysemembranen führen, wobei die mit der Alkalilauge in Kontakt stehende Membran gefährdet ist.

Es hat sich gezeigt, daß das im Spinnbad enthaltene $Ca^{2+}$, das während der Dialyse in die Mittelkammer wandert, dann zu einer Gefahr für die Membran wird, wenn die Konzentration 3 ppm übersteigt. Das erfindungsgemäße Verfahren kann so durchgeführt werden, daß dieser Wert erst in der letzten Dialysestufe erreicht wird, wodurch die Gefahr einer Membranschädigung allein auf die letzte Zelle beschränkt wird.

Das Ziel der vorliegenden Erfindung läßt sich schon bei zwei- oder dreistufiger Führung des erfindungsgemäßen Verfahrens erreichen.

Die Erfindung betrifft auch eine Vorrichtung zur Durchführung des Verfahrens, mit einer Mehrzahl von in Serie arbeitenden Elektrodialysezellen, welche jeweils eine Säure- und eine Basenkammer aufweisen und eine Kationenaustauschermembran besitzen, wobei die gleichnamigen Kammern der einzelnen Zellen leitungsmäßig miteinander verbunden sind und bei einer Säurekammer der letzten Zelle der Serie eine Ableitung für verdünnte Schwefelsäure und bei einer Basenkammer eine Ableitung für Alkalilauge vorgesehen ist, welche Vorrichtung dadurch gekennzeichnet ist, daß eine Säurekammer der ersten Zelle der Serie eine Zuleitung für alkalisulfathältige, wässerige Lösungen und die Basenkammer eine Zuleitung für verdünnte Alkalilauge aufweisen, und daß alle Elektrodialysezellen in ihrem Inneren ausschließlich Kationenaustauschermembrane besitzen und von bipolaren Ionenaustauschermembranen begrenzt sind.

Die gleichnamigen Kammern der einzelnen Zellen sind vorzugsweise leitungsmäßig über Zirkulationsbehälter (Tanks) zur Aufnahme der Elektrolyte der jeweiligen Stufen miteinander verbunden. Diese Tanks erleichtern die großtechnische Führung des erfindungsgemäßen Verfahrens. Ein Zirkulationsbehälter (Tank) der letzten Zelle der Serie kann leitungsmäßig mit einem Zirkulationsbehälter der ersten oder zweiten Zelle verbunden sein.

Bevorzugte Ausführungsformen der erfindungsgemäßen Vorrichtung sind zwei- oder dreistufig, wobei insbesondere als erste Stufe eine 2-Kammer-Elektrodialysezelle und als zweite und dritte Stufe eine 3-Kammer-Elektrodialysezelle vorgesehen ist.

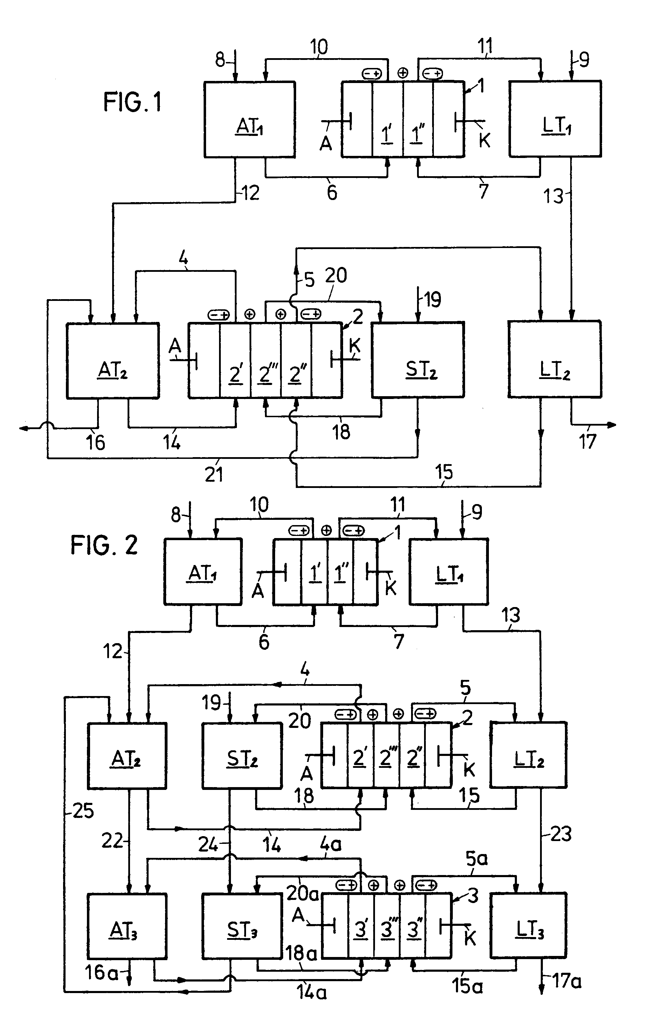

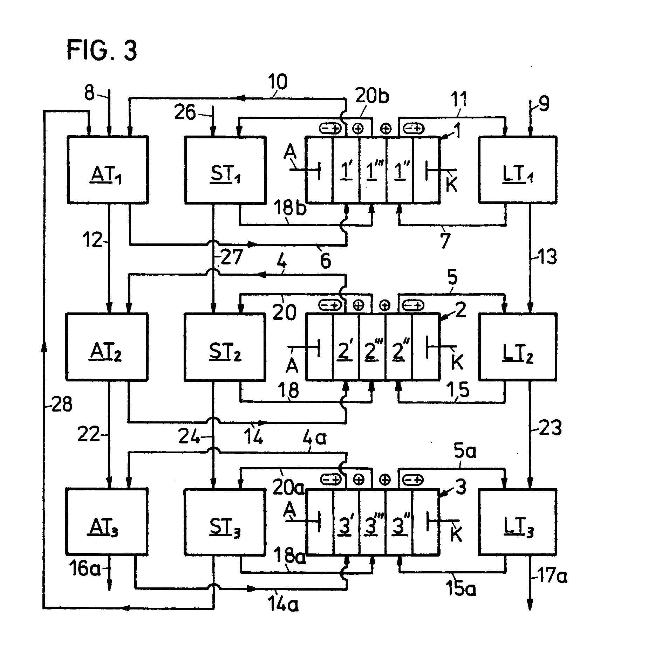

An Hand der Zeichnung werden drei Ausführungsformen der Erfindung näher erläutert, wobei die Figuren 1 bis 3 schematisch den Elektrolytfluß bei einer zweistufigen (Fig. 1) und zwei dreistufigen (Fig. 2 bis 3) erfindungsgemäßen Vorrichtungen angeben und die Fig. 1 und 2 die Kombination einer 2-Kammermit einer bzw. zwei 3-Kammerelektrodialysezellen wiedergeben und die Fig. 3 die Kombination von drei 3-Kammerzellen.

In den Figuren sind mit 1 und 2 bzw. mit 1,2 und 3 die Elektrodialysezellen der ersten, zweiten und der gegebenenfalls vorhandenen dritten Stufe bezeichnet. Jede der dargestellten Zellen wird von zwei bipolaren Ionenaustrauschermembranen - + begrenzt, während im Inneren der Zelle die einzelnen Kammern durch mindestens eine Kationenaustauschermembran + gebildet werden. Die Elektroden sind mit A für Anode und K für Kathode angedeutet. Mit $AT_{1-3}$, $LT_{1-3}$ und $ST_{1-3}$ sind Säure-, Laugen- bzw. Salztanks (Zirkulationsbehälter) der einzelnen Dialysestufen bezeichnet, die als Vorratsbehälter dienen. Die Richtung des Elektrolytflusses zwischen und in den einzelnen Stufen ist mit Pfeilen angegeben. 6 und 7 stellen die Zuleitungen für die alkalisulfathältigen, wässerigen Lösungen bzw. für die verdünnte Alkalilauge dar.

In Fig. 1 wird eine zweistufige Variante des erfindungsgemäßen Verfahrens dargestellt, wobei die erste Stufe in einer 2-Kammerzelle und die zweite Stufe in einer 3-Kammerzelle durchgeführt wird. Zunächst wird der Säuretank $AT_1$ und der Laugentank $LT_1$ mit der zu spaltenden Alkalisulfat-Lösung bzw. mit verdünnter Alkalilauge über die Einlässe 8 zw. 9 beschickt, diese Lösungen über die Zuleitungen 6 bzw. 7 und die Ableitungen 10 bzw. 11 kontinuierlich durch die Säurekammer 1' bzw. Basenkammer 1'' umgewälzt und bis zur Erreichung eines vorbestimmten Wertes elektrodialysiert.

Danach werden die zwei Elektrolytlösungen in den entsprechenden Säuretank $AT_2$ bzw. Laugentank $LT_2$ der zweiten Stufe abgelassen (12, 13), über die Säurekammer 2' bzw. Laugenkammer 2'' umgewälzt (14, 15) und zur gewünschten Endkonzentration weiter dialysiert, wobei die Elektrolytlösungen wieder im Kreis geführt, d.h. über die Leitungen 14 bzw. 15 der Zelle zu- und über die Leitungen 4 bzw. 5 rückgeführt werden. Sobald die gewünschte Endkonzentration erreicht ist, wird die verdünnte Schwefelsäure und die Alkalilauge aus den Tanks $AT_2$ und $LT_2$ abgezogen (16, 17).

Vor Durchführung der zweiten Stufe wird der Salz-Tank $ST_2$ mit wässeriger Alkalisulfat-Lösung über den Einlaß 19 beschickt und während der Dialyse ständig im Kreislauf durch die Mittelkammer 2''' geleitet (18, 20). Im Laufe der Dialyse reichert sich $H_2SO_4$ im Mittelkammerelektrolyt an. Nach der Dialyse wird der Mittelkammerelektrolyt aus dem Salz-Tank $ST_2$ abgelasen und in den Säure-Tank $AT_2$ überführt (21), wo er zusammen mit der nächsten Charge aus dem Säure-Tank $AT_1$ verwertet wird.

Fig. 2 zeigt eine dreistufige Variante des erfindungsgemäßen Verfahrens, wobei die erste Stufe in einer 2-Kammerzelle und die zweite und dritte Stufe in einer 3-Kammerzelle durchgeführt wird. Der Elektrolytfluß erfolgt in den ersten beiden Stufen analog der in Fig. 1 dargestellten Variante. Zur Vornahme der dritten Stufe wird nach Erreichen einer gewünschten Säure- bzw. Laugenkonzentration in den Tanks $AT_2$, $LT_2$, $ST_2$ der Elektrolyt aus diesen Tanks abgezogen und in die entsprechenden Tanks $AT_3$, $LT_3$ bzw. $ST_3$ der dritten Stufe eingespeist (22, 23, 24). Der Elektrolytfluß in der dritten Stufe deckt sich mit jenem der zweiten Stufe, wobei in der Fig. 2 die der zweiten Stufe entsprechenden Rohrleitungen mit gleicher Bezugsziffer, jedoch mit dem Index "a" bezeichnet sind.

Nach Erreichen der gewünschten Endkonzentration der Elektrolyten in den Tanks $AT_3$, $LT_3$, $ST_3$ wird die dritte Stufe gestoppt und die Endprodukte aus den Tanks $AT_3$ und $LT_3$ abgezogen. Der Elektrolyt aus dem Salz-Tank $ST_3$ wird in den Säuretank $AT_2$ der zweiten Stufe eingebracht und mit der nächsten Charge aus dem Säure-Tank $AT_1$ zusammen dialysiert.

Fig. 3 zeigt ebenfalls eine dreistufige Variante des erfindungsgemäßen Verfahrens, wobei aber alle drei Stufen in 3-Kammerzellen durchgeführt werden. Der Elektrolytfluß erfolgt im wesentlichen wie in Fig. 2 bereits beschrieben. Der Salz-Tank $ST_1$ wird über den Einlaß 26 mit einer Alkalisulfat-Lösung beschickt. Während der ersten Stufe der Dialyse wird diese Alkalisulfat-Lösung kontinuierlich durch die Mittelkammer 1''' geleitet (18b, 20b) und danach in den Salz-Tank $ST_2$ abgelassen (27). Gemäß der in Fig. 3 dargestellen Variante, die sich insbesonders zur Aufarbeitung von gebrauchten Spinnbad-Lösungen eignet, wird nach

4

Durchführung der dritten Stufe die Elektrolytlösung des Salz-Tanks $ST_3$ in den Säure-Tank $AT_1$ der ersten Stufe eingebracht (28) und zusammen mit der nächsten Charge an Spinnbadlösung aufgearbeitet.

Beispiel 1:

Es wurde eine Elektrodialysevorrichtung verwendet, wie sie in der Fig. 1 dargestellt ist, wobei die zwei Stufen nicht als Einzelzellen, sondern als sogenannte "Zellstacks" ausgebildet waren. Zellstacks sind Mehrfachzellen, die durch Aneinanderreihung von Einzelzellen zwischen den beiden Elektroden in an sich bekannter Weise zusammengesetzt werden.

Die verwendeten Zellstacks stammten von der Firma Aquatech Systems/USA NJ und besaßen jeweils 8 Zellen mit einer aktiven Fläche von 103 cm$^2$ je Membran.

Die Stromversorgung der einzelnen Stacks erfolgte über einen Gleichrichter, u.zw. derart, daß eine Stromdichte von konstant 10 A/dm$^2$ gehalten wurde. Die Elektrolytlösungen wurden erwärmt, so daß in den Zellstacks eine Temperatur von 45°C erreicht wurde. Sämtliche Zellstacks wurden chargenweise betrieben, indem die zu dialysierenden Elektrolyte so lange über die entsprechenden Tanksdurch das Stack zirkuliert wurden, bis die gewünschten Konzentrationen erreicht worden waren. Die so erhaltenen Produktlösungen wurden dann aus den Kreislaufsystemen abgezogen und diese mit neuen Ausgangslösungen beschickt.

Der Säure-Tank des ersten Zellstacks wurde mit nahezu gesättigter $Na_2SO_4$-Lösung und der Laugen-Tank mit 1,4 Gew.% NaOH-Lösung beschickt.

Nach 24-stündiger Elektrodialyse wurden die erhaltene 7,3 %ige $H_2SO_4$ und die 6,2 %ige NaOH in die jeweiligen Tanks der nachgeschalteten Stufe 2 abgelassen. Gleichzeitig mit der 7,3 %igen $H_2SO_4$ aus der ersten Stufe wurden hierbei auch der Elektrolyt aus der Mittelkammer der zweiten Stufe des vorangegangenen Versuchslaufs in den Säuretank übergeführt.

Der Tank des Mittelkammerkreislaufeswurde mit frischer 27 %iger $Na_2SO_4$-Lösung neu beschickt.

Nach 48-stündiger Elektrodialyse wurden aus dem Säure- und Laugentank die Endprodukte mit ca. 12 %iger $H_2SO_4$ bzw. 12 %iger NaOH abgezogen.

Das in der Mittelkammer entstehende Produkt mit 8,6 % $H_2SO_4$ wurde gemäß der eben beschriebenen Vorgangsweise in der darauffolgenden Charge in den Säuretank $AT_2$ übergeführt.

Mengenbilanz:

1. Zellstack (2-Kammerzelle):

Einsatzmengen:

| Säurekreislauf: | 43,7 kg | 27 % $Na_2SO_4$ |
|---|---|---|
| Laugekreislauf: | 46,5 kg | 1,4 % NaOH |

Produktmengen:

| Säurekreislauf: | 41,2 kg | 7,1 % $H_2SO_4$ | 18,4 % $Na_2SO_4$, |
|---|---|---|---|
| Laugekreislauf: | 49,2 kg | 6,2 % NaOH | |
| Stromausbeute: | 81,3 % | | |

2. Zellstack (3-Kammerzelle):

Einsatzmengen:

| Säurekreislauf: | Produkt aus Säurekreislauf des 1. Zellstacks (s.o.) + Produkt aus dem Mittelkammerkreislauf des 2. Zellstacks des vorangegangenen Versuchslaufes (27,8 kg 7,5 % $H_2SO_4$, 21,4 % $Na_2SO_4$). |
|---|---|
| Mittelkammerkreislauf: | 33,0 kg 27,4 % $Na_2SO_4$ |

Laugekreislauf: Produkt aus Laugekreislauf des 1. Zellstacks (s.o.)

Produktmengen:

| Säurekreislauf: | 64,8 kg | 11,9 % $H_2SO_4$ | 14 % $Na_2SO_4$, |
|---|---|---|---|
| Mittelkammerkreislauf: | 27,6 kg | 7,6 % $H_2SO_4$ | 21,6 % $Na_2SO_4$ |
| Laugekreislauf: | 56,4 kg | 12,3 % NaOH | |
| Stromausbeute: | 65,9 % | | |

| durchschnittliche Stromausbeute: | 71,0 % |
|---|---|
| durchschnittliche Spannung pro Zelle: | 1,95 V |
| Strombedarf: | 1,84 kWh/kg NaOH |

Beispiel 2:

Die Elektrodialysevorrichtung bestand aus insgesamt drei Zellstacks, welche nach dem in Fig. 2 dargestellten Schema in Serie geschaltet waren.

Alle drei Zellstacks stammten von der Firma Aquatech Systems/USA NJ und besaßen jeweils 8 Zellen mit je einer aktiven Fläche von 103 cm². Das erste Zellstack war nach dem 2-Kammer-, das zweite und dritte Zellstack nach dem 3-Kammer-System aufgebaut.

Analog Beispiel 1 wurden die einzelnen Stacks aus einem Gleichrichter mit einer konstanten Stromdichte von 10 A/dm² angespeist und durch Thermostatisierung der Elektrolytlösungen die Temperatur in den Zellen auf 45°C gehalten. Auch wurden sämtliche Zellstacks wieder chargenweise betrieben, indem die zu spaltende Lösung so lange dialysiert wurde, bis die gewünschte Teilumsetzung erreicht worden war.

Gemäß dem Fließschema in Fig. 2 wurde das erste Zellstack wieder mit den gleichen Lösungen und Mengen beschickt und innerhalb von 24 Stunden auch zu den gleichen Säure- und Base-Gehalten aufkonzentriert wie in Beispiel 1; d.h. 1,4 % Natronlauge wurde auf 6,2 % aufgestärkt und 27 %ige $Na_2SO_4$-Lösung bis zu einem Gehalt von 7,3 % $H_2SO_4$ dialysiert.

Die weitere Aufarbeitung der Lösungen erfolgte dann in Abänderung zu der im Beispiel 1 beschriebenen Vorgangsweise in zwei hintereinander angeordneten 3-Kammer-Elektrodialyseuren, u.zw. wie folgt: die aus dem Laugenkreislauf der ersten Stufe gewonnene 6,2 %ige NaOH wurde in denjenigen der zweiten Stufe transferiert. Die aus dem Säurekreislauf der ersten Stufe gewonnene 7,1 % $H_2SO_4$ wiederum wurde in denjenigen der zweiten Stufe übergeführt und gleichzeitig mit dieser auch das 7,2 % $H_2SO_4$ enthaltende Mittelkammerprodukt aus der dritten Stufe.

In den Mittelkammerkreislauf der zweiten Stufe wurde 29 %ige $Na_2SO_4$-Lösung eingespeist.

Nach 24-stündiger Elektrodialyse wurden die so erhaltenen Lösungen aus der zweiten Stufe sodann in die jeweils entsprechenden Kreislaufsysteme der dritten Stufe übergeführt, wo diese schließlich nach weiteren 24 Stunden auf die gewünschte Endkonzentration gebracht wurden, nämlich auf ca. 12 %ige NaOH und ca. 12 % $H_2SO_4$; das in der Mittelkammer entstandene Produkt mit 7,2 % $H_2SO_4$ wurde gemäß der beschriebenen Vorgangsweise in der darauffolgenden Charge wieder in den Säurekreislauf der zweiten Stufe transferiert.

Mengenbilanz:

1. Zellstack (2-Kammerzelle):

Einsatzmengen:

| Säurekreislauf: | 43,7 kg | 27 % $Na_2SO_4$ |
|---|---|---|
| Laugekreislauf: | 46,5 kg | 1,4 % NaOH |

Produktmengen:

| Säurekreislauf: | 41,2 kg | 7,1 % $H_2SO_4$ 18,4 % $Na_2SO_4$, |
|---|---|---|
| Laugekreislauf: Stromausbeute: | 49,2 kg 81,3 % | 6,2 % NaOH |

2. Zellstack (3-Kammerzelle):

Einsatzmengen:

Säurekreislauf: Produkt aus Säurekreislauf des 1. Zellstacks (s.o.) + Produkt aus dem Mittelkammerkreislauf des 3. Zellstacks des vorangegangenen Versuchslaufes (27,4 kg 7,3 % $H_2SO_4$).

Mittelkammerkreislauf: 33,0 kg 29 % $Na_2SO_4$

Laugekreislauf: Produkt aus Laugekreislauf des 1. Zellstacks (s.o.)

Produktmengen:

| Säurekreislauf: | 65,3 kg | 10,3 % $H_2SO_4$ |
|---|---|---|
| Mittelkammerkreislauf: | 30,7 kg | 2,8 % $H_2SO_4$ |
| Laugekreislauf: | 53,2 kg | 9,8 % NaOH |
| Stromausbeute: | 73,2 % | |

3. Zellstack (3-Kammerzelle):

Einsatzmengen:
Säurekreislauf,
Mittelkammerkreislauf,  } Produkte aus den jeweiligen Kreisläufen des
Laugekreislauf:  2. Zellstacks

Produktmengen:

| Säurekreislauf: | 64,5 kg | 12,3 % $H_2SO_4$ |
|---|---|---|
| Mittelkammerkreislauf: | 27,4 kg | 7,3 % $H_2SO_4$ |
| Laugekreislauf: | 57,0 kg | 12,5 % NaOH |
| Stromausbeute: | 57,1 % | |

| durchschnittliche Stromausbeute: | 70,5 % |
|---|---|
| durchschnittliche Spannung pro Zelle: | 1,94 V |
| Strombedarf: | 1,84 kWh/kg NaOH |

Beispiel 3:

Die Elektrodialysevorrichtung bestand aus 3 Zellstacks, welche wie in Fig. 3 dargestellt, in Serie verbunden waren. Die verwendeten Zellstacks stammten von Aquatech Systems/USA NJ und waren sowohl in bezug auf den Aufbau als auch bezüglich der Größe und Anzahl der Zellen identisch. Sie besaßen 8 Zellen, die nach dem 3-Kammerzellen-Prinzip aufgebaut waren, wobei die die einzelnen Kammern begrenzenden Membranen sich aus einer bipolaren, einer Kation- und einer weiteren Kation-Membran zusammensetzten. Die aktive Fläche pro Membran betrug ca. 103 cm$^2$.

Stromstärke und Temperatur waren in allen Modulen gleich, nämlich 10,4 A/dm$^2$ bzw. 45 °C. Alle Zellstacks wurden wieder chargenweise betrieben, wobei die zu dialysierenden Lösungsolange über einen Behälter durch das Stack zirkuliert wurden, bis die gewünschte Teilumsetzung erreicht worden war.

Gemäß dem in Fig. 3 dargestellten Fließschema wurde das 1. Zellstack mit den Ausgangslösungen beschickt und zwar der Laugen-Tank mit 1,5 %iger Natronlauge, der Salz-Tank mit 27 %iger Na$_2$SO$_4$-Lösung und der Säure-Tank mit 4,3% H$_2$SO$_4$ hältigem Spinnbad; gleichzeitig wurde in den Säuretank außerdem auch das Mittelkammerprodukt aus dem 3. Zellstack des vorangegangenen Versuchslaufs eingespeist.

Nach 7stündiger Dialyse wurden die so erhaltenen, an Säure bzw. Lauge angereicherten Lösungen aus den jeweiligen Tanks der ersten Stufe in die entsprechenden Tanks der zweiten Stufe übergeführt und dort neuerlich 7 Stunden elektrodialysiert und dadurch weiter an Säure bzw. Lauge aufgestärkt.

Dann wurden die Lösungen in analoger Weise in die dritte Stufe transferiert, wo sie in abermals 7 Stunden schließlich auf die Endkonzentration gebracht wurden:

Diese betrug für die Lauge 12,2 %, für das aus der Säure-Kammer abgezogene Produkt 12,0 % H$_2$SO$_4$. Das die Mittelkammer verlassende 8,2 % H$_2$SO$_4$ enthaltende Produkt wurde im darauffolgenden Lauf mit Spinnbad vermischt und in die Säurekammer des 1. Zellstacks eingespeist.

Mengenbilanz:

1. Zellstack

Einsatzmengen

Säurekreislauf:    16,1 kg Spinnbad
(4,3 % H$_2$SO$_4$, 20,2 % Na$_2$SO$_4$,
10 ppm Ca) + Mittelkammerendprodukt aus Zellstack 3 des vorangegangenen Laufs.

| Mittelkammerkreislauf: | 13,0 kg | 27% Na$_2$SO$_4$ |
| Laugekreislauf: | 14,0 kg | 1,5 % NaOH |

3. Zellstack:

Produktmengen

| Säurekreislauf: | 25,3 kg | 12,0 % H$_2$SO$_4$, | 15,1 % Na$_2$SO$_4$ |
| Mittelkammerkreislauf: | 10,1 kg | 8,2 % H$_2$SO$_4$ | 23,6 % Na$_2$SO$_4$ |
| Laugekreislauf: | 17,6 kg | 12,2 % NaOH | |

Während die Mittelkammerlösung im letzten Zellstack bereits die kritische Konzentration von 2,8 ppm Ca erreichte, lagen die Konzentrationen im 1. und 2. Zellstack mit 2,0 und 1,1 ppm Ca noch im sicheren Bereich.

| durchschnittliche Stromausbeute: | 71,8 % |
|---|---|
| durchschnittliche Spannung pro Zelle: | 2,0 V |
| Strombedarf | 1,87 kWh/kg NaOH |

Beispiel 4:

Es wurde die gleiche Elektrodialysevorrichtung verwendet wie in Fig. 3 dargestellt, wobei jedoch der Salz-Tank $ST_3$ mit dem Säure-Tank $AT_1$ nicht leitungsmäßig verbunden ist.

Die verwendeten Zellstacks stammten von Aquatech Systems/USA NJ und waren dieselben, wie in dem vorherigen Beispiel 3, auch die Stromstärke und die Temperatur waren in allen Modulen dieselben, nämlich 10,4 A/dm$^2$ bzw. 45°C.

Gemäß dem in Fig. 3 dargestellten Fließschema wurde das 1. Zellstack mit den Ausgangslösungen, nämlich mit 1,5 %iger Natronlauge und 4,2 % $H_2SO_4$-hältigem Spinnbad sowie mit 27 %iger $Na_2SO_4$-Lösung als Spüllösung (Mittelkammer) beschickt. Nach 6-stündiger Dialyse wurden die an Säure bzw. Lauge angereicherten Lösungen aus dem Säure- bzw. Laugekreislauf sowie die $Na_2SO_4$-Spüllösung aus dem Mittelkammerkreislauf abgezogen und in die entsprechenden Kreislaufsysteme des 2. Zellstacks übergeführt und dort neuerlich einer 6-stündigen Dialyse unterzogen. Hernach wurden die Lösungen in das 3. Stack übergeführt, wo die Säure und Lauge schließlich auf die gewünschte Endkonzentration von 7,3 bzw. 14,5 % gebracht wurden.

Die praktisch neutral gebliebene Pufferlösung (Spüllösung) wurde mittels Ionenaustauscher von den in einer Konzentration von 2,5 ppm eingewanderten Ca-Ionen wieder befreit und nach Ergänzung der Wasserverluste wieder als Spüllösung für die darauffolgende Charge im 1. Zellstack eingesetzt.

Mengenbilanz:

1. Zellstack:

Einsatzmengen

Säurekreislauf:     63 kg Spinnbad
(4,2 % $H_2SO_4$, 20,0 % $Na_2SO_4$
25 ppm Ca)

| Mittelkammerkreislauf: | 63 kg | 27 % $Na_2SO_4$ |
|---|---|---|
| Laugekreislauf: | 8,5 kg | 1,6 % NaOH |

3. Zellstack:

Produktmengen

| Säurekreislauf: | 62,6 kg | 7,4 % $H_2SO_4$, | 17,3 % $Na_2SO_4$ |
|---|---|---|---|
| Mittelkammerkreislauf: | 59,3 kg | 27 % $Na_2SO_4$, | 0 % $H_2SO_4$ |
| Laugekreislauf: | 12,3 kg | 14,5 % NaOH | |

Während die Mittelkammerlösung im 3. Zellstack bereits eine kritische Konzentration von 2,5 ppm Ca erreichte, lagen die Konzentrationen im 1. und 2. Zellstack mit 1,0 und 1,8 ppm Ca noch im sicheren Bereich.

| durchschnittliche Stromausbeute | 71,7 % |
| durchschnittliche Spannung pro Zelle | 2,28 V |
| Strombedarf | 2,13 kWh/kg NaOH |

**Patentansprüche**

1. Verfahren zur Aufarbeitung alkalisulfathältiger wässeriger Lösungen durch stufenweise Elecktrodialyse, wobei diese Lösungen durch eine Mehrzahl von in Serie arbeitenden Elektrodialysezellen geleitet werden, welche Säure- und Basenkammer aufweisen und eine Kationenaustauschermembran besitzen, dadurch gekennzeichnet, daß die alkalisulfathältigen, wässerigen Lösungen ausschließlich durch Säurekammern der Elektrodialysezellen geleitet werden, welche Elektrodialysezellen in ihrem Inneren ausschließlich Kationenaustauschermembrane besitzen und durch bipolare lonenaustauschermembranen begrenzt sind.

2. Verfahren nach Anspruch 1, dadurch gekennzeichnet, daß die erste Stufe der Elektrodialyse in einer 2-Kammer-Elektrodialysezelle und jede weitere Stufe in einer 3-Kammer-Elektrodialysezelle durchgeführt wird.

3. Verfahren nach Anspruch 2, dadurch gekennzeichnet, daß die Säure- und Basenkammer der 2-Kammer-Elektrodialysezelle mit konzentrierter, wässeriger $Na_2SO_4$-Lösung bzw. mit verdünnter Alkalilauge, vorzugsweise enthaltend zwischen 1,5 und 2 % Masse Alkalihydroxid, beschickt werden und diese Lösungen in der ersten Stufe bis zu einer Schwefelsäure- bzw. Alkalihydroxid-Konzentration von maximal 10 % Masse elektrodialysiert werden.

4. Verfahren nach Anspruch 1 zur stufenweisen Elektrodialyse von insbesondere gebrauchten Spinnbadlösungen, die bei der Herstellung regenerierter Cellulose nach dem Xanthogenatprozeß anfallen, dadurch gekennzeichnet, daß die Lösungen ausschließlich durch Säurekammern von 3-Kammer-Elektrodialysezellen geleitet werden.

5. Verfahren nach einem oder mehreren der Ansprüche 1 bis 4, dadurch gekennzeichnet, daß die Elektrodialyse zwei- oder dreistufig geführt wird.

6. Vorrichtung zur Durchführung des Verfahrens nach einem oder mehreren der Ansprüche 1 bis 5, mit einer Mehrzahl von in Serie arbeitenden Elektrodialysezellen (1 bis 3), welche jeweils Säure-(1' bis 3') und Basenkammer (1'' bis 3'') aufweisen und eine Kationenaustauschermembran ( ⊕ ) besitzen, wobei die gleichnamigen Kammern der einzelnen Zellen (1 bis 3) leitungsmäßig miteinander verbunden sind und bei einer Säurekammer (2' bzw. 3') der letzten Zelle (2 bzw. 3) der Serie eine Ableitung (4, 4a) für verdünnte Schwefelsäure und bei einer Basenkammer (2'' bzw. 3'') eine Ableitung (5, 5a) für Alkalilauge vorgesehen ist, dadurch gekennzeichnet, daß eine Säurekammer (1') der ersten Zelle (1) der Serie eine Zuleitung (6) für alkalisulfathältige, wässerige Lösungen und die Basenkammer (1'') eine Zuleitung (7) für verdünnte Alkalilauge aufweisen, und daß alle Elektrodialysezellen (1 bis 3) in ihrem Inneren ausschließlich Kationenaustauschermembrane ( ⊕ ) besitzen und von bipolaren lonenaustauschermembranen (⊖) begrenzt sind.

7. Vorrichtung nach Anspruch 6, dadurch gekennzeichnet, daß die gleichnamigen Kammern der einzelnen Zellen (1 bis 3) leitungsmäßig über Zirkulationsbehälter ($AT_{1-3}$; $LT_{1-3}$; $ST_{1-3}$) miteinander verbunden sind.

8. Vorrichtung nach Anspruch 7, dadurch gekennzeichnet, daß ein Zirkulationsbehälter ($ST_2$, $ST_3$) der letzten Zelle (2, 3) der Serie leitungsmäßig (21, 25, 28) mit einem Zirkulationsbehälter ($AT_2$, $AT_1$) der ersten oder der zweiten Zelle (1, 2) verbunden ist.

9. Vorrichtung nach einem oder mehreren der Ansprüche 6 bis 8, dadurch gekennzeichnet, daß sie zwei- oder dreistufig ausgeführt ist, wobei vorzugsweise als erste Stufe eine 2-Kammer-Elektrodialysezelle und als zweite und dritte Stufe eine 3-Kammer-Elektrodialysezelle vorgesehen ist.

**Claims**

1. Process for the reprocessing of aqueous solutions containing alkali sulphate by stepwise electro-dialysis, whereby these solutions are led through a multiplicity of electro-dialysis cells operating in series where these cells have acid and base chambers and a cationic exchange membrane, characterised in that, the aqueous solutions containing alkali sulphate are led exclusively through the acid chambers of the electro-dialysis cells where these electro-dialysis cells possess exclusively cationic exchange membranes in their interiors and are bounded by bipolar ionic exchange membranes.

2. Process in accordance with Claim 1, characterised in that, the first stage of the electro-dialysis is carried out in a 2-chamber electro-dialysis cell and each additional stage is carried out in a 3-chamber electro-dialysis cell.

3. Process in accordance with Claim 2, characterised in that, the acid and base chambers of the 2-chamber electro-dialysis cells are fed with concentrated aqueous $Na_2SO_4$ solution or with dilute caustic alkali respectively, preferably containing between 1.5 and 2 wt% alkali hydroxide, and these solutions are electro-dialysed in the first stage to give sulphuric acid or alkali hydroxide respectively with a concentration of 10 wt% maximum.

4. Process in accordance with Claim 1 for the stepwise electro-dialysis of used spinning bath solutions in particular, such as arise from the preparation of regenerated cellulose by the xanthogenate process, characterised in that, the solutions are led exclusively through the acid chambers of 3-chamber electro-dialysis cells.

5. Process in accordance with one or more of Claims 1 to 4, characterised in that, the electro-dialysis is carried out in 2 stages or in 3 stages.

6. Device for carrying out the process in accordance with one or more of the Claims 1 to 5, with a multiplicity of electro-dialysis cells (1 to 3) operating in series which each have acid chambers (1' to 3') and base chambers (1" to 3") and a cationic exchange membrane ( + ), whereby like chambers of the individual cells (1 to 3) are connected to one another by pipes, and whereby one acid chamber (2' or 3' respectively) of the last cell (2 or 3 respectively) of the series is provided with an outlet (4, 4a) for dilute sulphuric acid and whereby a base chamber (2" or 3" respectively) is provided with an outlet (5, 5a) for dilute caustic alkali, characterised in that, one acid chamber (1') of the first cell (1) of the series has an inlet (6) for aqueous solutions containing alkali sulphate and the base chamber (1") has an inlet (7) for dilute caustic alkali, and that all electro-dialysis cells (1 to 3) possess exclusively cationic exchange membranes ( + ) in their interiors and are bounded by bipolar ionic exchange membranes ( - + ).

7. Device in accordance with Claim 6, characterised in that, the like chambers of individual cells (1 to 3) are connected to one another by pipes through circulation containers ($AT_{1-3}$; $LT_{1-3}$; $ST_{1-3}$).

8. Device in accordance with Claim 7, characterised in that, a circulation container ($ST_2$; $ST_3$) of the last cell (2, 3) of the series is connected by pipes (21, 25, 28) with a circulation container ($AT_2$, $AT_1$) of the first or the second cell (1, 2).

9. Device in accordance with one of more of Claims 6 to 8, characterised in that, it is carried out in two-stages or in three-stages, whereby preferably a 2-chamber electro-dialysis cell is provided as the first stage and a 3-chamber electro-dialysis cell is provided as the second and the third stage.

**Revendications**

1. Procédé pour le traitement de recyclage, par électrodialyse étagée, de solutions aqueuses contenant des sulfates aicalins, solutions que l'on fait passer à travers une pluralité de cellules d'électrodialyse fonctionnant en série et comportant une chambre acide et une chambre basique ainsi qu'une membrane échangeuse de cations, **caractérisé en ce que** l'on fait passer les solutions aqueuses contenant des sulfates alcalins exclusivement à travers des chambres acides des cellules d'électrodialyse, ces cellules d'électrodialyse comportant en leur intérieur exclusivement des membranes échangeuses de cations et étant limitées par des membranes bipolaires échangeuses d'ions.

2. Procédé selon la revendication 1, **caractérisé en ce que** le premier étage de l'électrodialyse se fait dans une cellule d'électrodialyse à deux chambres et chaque étage suivant se fait dans une cellule d'électrodialyse à trois chambres.

3. Procédé selon la revendication 2, **caractérisé en ce que** la chambre acide et la chambre basique de la cellule d'électrodialyse à deux chambres sont respectivement alimentées en solution concentrée aqueuse de $Na_2SO_4$ et en lessive alcaline diluée, laquelle contient de préférence de 1,5 à 2 % en masse d'hydroxyde alcalin, et ces solutions sont électrodialysées dans le premier étage jusqu'à une concentration respective d'au plus 10 % en masse d'acide sulfurique et d'hydroxyde alcalin.

4. Procédé selon la revendication 1 pour l'électrodialyse étagée de solutions de bains de filage, en particulier usagées, qui résultent de la production de cellulose régénérée selon le procédé au xanthogénate, **caractérisé en ce que** l'on fait passer les solutions exclusivement à travers des chambres acides de cellules d'électrodialyse à trois chambres.

5. Procédé selon une ou plusieurs des revendications 1 à 4, **caractérisé en ce que** l'électrodialyse se fait à deux ou trois étages.

6. Dispositif pour la mise en oeuvre du procédé selon une ou plusieurs des revendications 1 à 5, comportant une pluralité de cellules d'électrodialyse (1 à 3) fonctionnant en série et comportant chacune une chambre acide (1' à 3') et une chambre basique (1'' à 3'') ainsi qu'une membrane échangeuse de cations ( $\oplus$ ), les chambres de même nom des cellules individuelles (1 à 3) étant reliées entre elles par des conduites, tandis que pour une chambre acide (2' respectivement 3') de la dernière cellule (2 respectivement 3) de la série il est prévu une conduite de décharge (4, 4a) pour de l'acide sulfurique dilué et pour une chambre basique (2'' respectivement 3'') il est prévu une conduite de décharge (5, 5a) pour de la lessive alcaline, **caractérisé en ce qu'**une chambre acide (1') de la première cellule (1) de la série est munie d'une conduite d'alimentation (6) pour des solutions aqueuses contenant des sulfates alcalins et la chambre basique (1'') est munie d'une conduite d'alimentation (7) pour de la lessive alcaline diluée, et en ce que toutes les cellules d'électrodialyse (1 à 3) comportent en leur intérieur exclusivement des membranes échangeuses de cations ( $\oplus$ ) et sont limitées par des membranes bipolaires échangeuses d'ions ((- + )).

7. Dispositif selon la revendication 6, **caractérisé en ce que** les chambres de même nom des cellules individuelles (1 à 3) sont reliées entre elles par des conduites en passant par des récipients de circulation ($AT_{1-3}$; $LT_{1-3}$; $ST_{1-3}$).

8. Dispositif selon la revendication 7, **caractérisé en ce qu'**un récipient de circulation ($ST_2$, $ST_3$) de la dernière cellule (2, 3) de la série est relié par une conduite (21, 25, 28) à un récipient de circulation ($AT_2$, $AT_1$) de la première ou deuxième cellule (1, 2).

9. Dispositif selon une ou plusieurs des revendications 6 à 8, **caractérisé en ce qu'**il est réalisé à deux ou trois étages, le premier étage étant de préférence prévu sous forme de cellule d'électrodialyse à deux chambres et les deuxième et troisième étages étant de préférence prévus sous forme de cellules d'électrodialyse à trois chambres.

FIG.1

FIG. 2

# FIG. 3